Europäisches Patentamt

European Patent Office

Office européen des brevets

(19)

(11) Veröffentlichungsnummer: **0 426 651 A2**

(12) **EUROPÄISCHE PATENTANMELDUNG**

(21) Anmeldenummer: 90890290.1

(22) Anmeldetag: 29.10.90

(51) Int. Cl.⁵: **B02C 23/32**, B02C 23/00, B02C 19/00

(30) Priorität: 30.10.89 AT 2489/89

(43) Veröffentlichungstag der Anmeldung:
08.05.91 Patentblatt 91/19

(84) Benannte Vertragsstaaten:
**BE CH DE DK ES FR GB GR IT LI LU NL SE**

(71) Anmelder: **Maschinenfabrik Liezen
Gesellschaft m.b.H.
Werkstrasse 5
A-8940 Liezen(AT)**

(72) Erfinder: **Stoiber, Wolfgang, Dipl.-Ing.
Wurzingergasse 3
A-1180 Wien(AT)**

(74) Vertreter: **Haffner, Thomas M., Dr. et al
Patentanwaltskanzlei Dipl.-Ing. Adolf
Kretschmer Dr. Thomas M. Haffner
Schottengasse 3a
A-1014 Wien(AT)**

(54) Verfahren zum Zerkleinern von stückigem Material sowie Vorrichtung zur Durchführung dieses Verfahrens.

(57) Bei einem Verfahren zum Zerkleinern von stückigem Material, wie z.B. Zementausgangsstoffen, unter Verwendung eines Horizontalprallbrechers (2) als Vorzerkleinerungsstufe und einer Kugelrohrmühle (13) als Zerkleinerungsstufe, wobei der Zerkleinerungsstufe (13) ein durch Siebung (9) und/oder Sichtung klassiertes Material zugeführt wird, wird im Horizontalprallbrecher (2) eine Sichtung unter Zufuhr (6) von Druckgasen vorgenommen und es wird das Grobkorn aus der Vorzerkleinerungsstufe (2) über gegenüber dem Druckgasstrom Strömungswiderstände aufbauende Einrichtungen (5), wie z.B. Stauklappen, ausgetragen. In weiterer Folge wird nach einer Siebung (9) der Siebdurchgang (12) der Kugelrohrmühle (13) und der Siebüberlauf (10) der Vorzerkleinerungsstufe (2) zugeführt.

Ein Horizontalprallbrecher (2) mit einer Austragsöffnung (35) für Grobkorn und wenigstens einer weiteren Austragsöffnung (7) für Feingut zur Durchführung dieses Verfahrens weist dabei eine Gebläseleitung (6) auf und es sind an der unterhalb des Rotors (4) vorgesehenen Austragsöffnung für das Grobkorn Stauorgane (5), wie beispielsweise Pendelklappen, Zellradschleusen oder Förderschnecken angeordnet.

FIG. 1

EP 0 426 651 A2

## VERFAHREN ZUM ZERKLEINERN VON STÜCKIGEM MATERIAL SOWIE VORRICHTUNG ZUR DURCHFÜHRUNG DIESES VERFAHRENS

Die Erfindung bezieht sich auf ein Verfahren zum Zerkleinern von stückigem Material, wie z.B. Zementausgangsstoffen, unter Verwendung eines Horizontalprallbrechers als Vorzerkleinerungsstufe und einer Kugelrohrmühle als Zerkleinerungsstufe, wobei der Zerkleinerungsstufe ein durch Siebung und/oder Sichtung klassiertes Material zugeführt wird, sowie auf einem Horizontalbrecher zur Durchführung dieses Verfahrens.

Für die Zerkleinerung von stückigem Material ist es bekannt Kugelrohrmühlen zu verwenden. Derartige Kugelrohrmühlen sind in unterschiedlicher Ausbildung bekannt, wobei in Abhängigkeit von der Mahlkörpermasse, dem Füllungsgrad, der Rotationsgeschwindigkeit, dem Mahlraumdurchmesser und der Ausbildung der Mühlenauskleidung je nach zu zerkleinerndem Material unterschiedliche Mahlleistungen erzielt werden können. Derartige Kugelrohrmühlen können dann optimal an die Erfordernisse des Mahlvorganges angepaßt werden, wenn der Kugelrohrmühle ein begrenztes Kornband zur Verfügung gestellt wird, wobei das aufzugebende Material eine minimale und eine maximale Korngröße aufweisen soll. Um eine derartige Klassierung des auf Kugelrohrmühlen aufzugebenden Materials zu erzielen, ist es bekannt, Sichter und/oder Siebe zu verwenden.

Um den Energieverbrauch von Mahlvorgängen, beispielsweise bei der Zerkleinerung von Zementausgangsstoffen zu optimieren, wurde bereits vorgeschlagen, den Mahlvorgang in eine Vorzerkleinerung und eine nachfolgende, von einer Kugelrohrmühle gebildete Zerkleinerungsstufe zu unterteilen. Die zum Zwecke der Minimierung des Energieverbrauches vorgeschlagene Vorzerkleinerung wurde gemäß dem Vorschlag in "Zement-Kalk-Gips" 4/1989, Seiten 170 bis 174, als Horizontalprallbrecher ausge bildet, wobei gemäß diesem bekannten Vorschlag, das gesamte, aus dem Horizontalprallbrecher ausgetragene Material einer Siebung unterworfen wurde, worauf das Grobkorn nach einer nachfolgenden Sichtung des Siebdurchganges der Kugelrohrmühle zugeführt wurde. Bei einer derartigen Ausbildung müssen relativ groß dimensionierte Sichter verwendet werden. Die durch die Kombination eines Horizontalprallbrechers mit einer Kugelrohrmühle erzielbaren Einsparungen an Energie führen hiebei zwar zur Verringerung des massenbezogenen Energieaufwandes, nicht aber zu einer Erhöhung der Durchsatzleistung bei kleinbauenden Mühlenaggregaten.

Horizontalprallbrecher sind gleichfalls in unterschiedlichen Ausbildungen bereits bekanntgeworden. Der EP-A2 140 613 ist im besonderen ein Horizontalprallbrecher zu entnehmen, dessen Ausbildung so getroffen ist, daß um die Aufgabeöffnung herum eine von der Rotationsgeschwindigkeit des Rotors des Prallbrechers abhängige Sichtung vorgenommen werden kann. Die Rotationsgeschwindigkeit muß Erzielung der gewünschten Brechleistung jeweils den Erfordernissen angepaßt werden und bei gegebener Rotationsgeschwindigkeit ergibt sich bei einer derartigen Ausbildung bei gegebener konstruktiver Durchbildung des Horizontalprallbrechers ein maximal mögliches Sichtungsergebnis, welches in der Folge nicht mehr beeinflußt werden kann.

Die Erfindung zielt nun darauf ab, ein Verfahren der eingangs genannten Art dahingehend weiterzubilden, daß mit kleinbauenden Antriebsaggregaten bei unterschiedlichen zu mahlenden Materialien der Massendurchsatz erhöht werden kann und insbesondere in der Vorzerkleinerungsstufe eine einstellbare Klassierung durch Sichtung ermöglicht wird. Zur Lösung dieser Aufgabe besteht die erfindungsgemäße Verfahrensführung im wesentlichen darin, daß im Horizontalprallbrecher eine Sichtung unter Zufuhr von Druckgasen vorgenommen wird und das Grobkorn aus der Vorzerkleinerungsstufe über gegenüber dem Druckgasstrom Strömungswiderstände aufbauende Einrichtungen, wie z.B. Stauklappen, ausgetragen wird, worauf nach einer Siebung der Siebdurchgang des Grobkornes der Kugelrohrmühle und der Siebüberlauf der Vorzerkleinerungsstufe zugeführt wird. Dadurch, daß die im Horizontalprallbrecher vorgenommene Sichtung unter Zufuhr von Druckgasen vorgenommen wird, wird die Möglichkeit geschaffen, unabhängig von der jeweils als optimal ermittelten Drehzahl des Horizontalprallbrecherrotors eine effiziente Sichtung und Abtrennung eines vorgegebenen Kornbandes über den Feinstoffaustrag zu gewährleisten. Um nun bei der Verwendung von Druckgasen sicherzustellen, das das Kleinkorn tatsächlich über die hiefür vorgesehene Feinkornaustragsöffnung, nicht aber über die Austragsöffnung für das Grobkorn austreten kann, wird erfindungsgemäß so vorgegangen, daß der Grobkornaustrag mit Strömungswiderständen für das Druckgas ausgestattet ist, wodurch im Bereich des Grobkornaustrages ein Staudruck aufgebaut wird und Feinstkorn, wie es durch die Sichtung abgetrennt werden soll, tatsächlich nur mehr über den hiefür vorgesehenen Feinstkornaustrag ausgetragen werden kann. Die Möglichkeit, durch Wahl des Druckes für das Druckgas das Ergebnis der Sichtung unabhängig von der jeweils optimalen Rotordrehgeschwindigkeit zu beeinflussen, bietet darüberhinaus die Möglichkeit, auch die Brecheigenschaften und die Brechleistung des Horizontalprallbrechers durch Wahl eines geeigneten Druckes für die Sichtung zu beeinflussen. Zu diesem Zweck kann durch Vorgabe eines an das jeweilige Material angepaßten Druckniveaus eine mehr oder minder stabile Wirbelschicht innerhalb der Rotorebene abgebaut werden, welche dazu führt, das die Zerkleinerung so lange fortschreitet, als die für das jeweilige Druckniveau und die Strömungsgeschwindigkeit des Druckgases vorgegebene Korngrößengrenze noch nicht erreicht wird, über welche ein Austrag in Richtung des Feinkornaustrages vorgenommen wird. Die Unabhängigkeit dieser Vorgabe von Strömungsgeschwindigkeit und Druckniveau des für die Sichtung verwendeten gasförmigen Mediums von den durch die Rotationsgeschwindigkeit des Rotors verursachten Strömungsgeschwindigkeiten des Gases im Inneren des Brechers bietet darüberhinaus die Möglichkeit, auch andere, die Brechleistung beeinflussende Parameter, wie beispielsweise die Temperatur und die Feuchtigkeit, in einfacher Weise an die Erfordernisse anzupassen. Zu diesem Zweck wird erfindungsgemäß in vorteilhafter Weise so vorgegangen, das das Druckgas vor der Einspeisung zur Einstellung von Temperatur und/oder Feuchtigkeit konditioniert wird, wobei insbesondere zum Zwecke der Erwärmung oder der Kühlung des Druckgases das Druckgas vor der Einspeisung über Wärmetauscher geführt werden kann.

Insgesamt gelingt es mit einer derartigen, kleinbauenden Vorzerkleinerungsstufe auf Grund der Abtrennung eines definierten Kornbandes über die integrierte Sichtung einen Grobkornmaterialstrom mit bereits erheblich verminderten Feinkornanteilen der nachfolgenden Siebung zu unterwerfen, wodurch gleichzeitig die Gefahr eines Verlegens oder Verklebens des nachfolgenden Siebes wesentlich reduziert wird, was nicht zuletzt dadurch ermöglicht wird, das die Luftfeuchtigkeit und die Temperatur des Druckgases in geeigneter Weise beeinflußt werden kann.

Die Effizienz einer nachfolgenden Kugelmühle kann in der Regel dadurch wesentlich gesteigert werden, das ungünstiger Grobanteil abgesiebt wird und als Siebüberlauf der vorangehenden Vorzerkleinerungsstufe wieder rückgeführt wird. Durch Aufgabe eines nach oben hin in der Korngröße limitierten Aufgabegutes kann die Effizienz der Kugelmühle ebenso wirkungsvoll angehoben werden, wie durch Begrenzung des Kleinstkornes nach unten hin, wobei die Abtrennung des Kleinstkornes durch die in den Horizontalprallbrecher integrierte Sichtung den Massenstrom in der nachfolgenden Kugelmühle wesentlich reduziert. Diese Begrenzung der Korngröße erlaubt es, die Kugelcharge auf die obere und untere Aufgabekorngröße zu optimieren.

Ein für die Durchführung des erfindungsgemäßen Verfahrens besonders geeigneter Horizontalprallbrecher mit einer Austragsöffnung für Grobkorn und wenigstens einer weiteren Austragsöffnung für Feingut ist im wesentlichen dadurch gekennzeichnet, daß an den Brecher eine Gebläseleitung angeschlossen ist und daß an der unterhalb des Rotors vorgesehenen Austragsöffnung für das Grobkorn Stauorgane, wie z.B. Pendelklappen, Zellradschleusen oder Förderschnecken angeordnet sind. Die Verwendung derartiger Stauorgane, wie z.B. Pendelklappen, Zellradschleusen und Förderschnecken an der Austragsseite für das Grobkorn hat hiebei den zusätzlichen Vorteil, daß auch die vom Rotor des Horizontalprallbrechers selbst bei konventionellen Konstruktionen eines derartigen Horizontalprallbrechers angesaugte Luft nicht durch die Austragsöffnung entweichen kann. Je nach Geschwindigkeit des Rotors und durchgesetzter Luftmenge würden hiebei nämlich Partikel unterschiedlicher Größe ausgetragen werden. Die Unabhängigkeit der Klassierleistung innerhalb des Horizontalprallbrechers von der Rotordrehzahl bzw. Rotorgeschwindigkeit und der auf Grund der gegebenen Rotorgeschwindigkeit angesaugten Luftmenge durch Einführen von Druckgas über die an den Brecher angeschlossene Gebläseleitung kann hiebei dazu verwendet werden, die Luftgeschwindigkeit so weit zu vergrößern, daß bestimmte Korngrößen in der Höhe des Rotors in Schwebe gehalten werden können und im Rotor durch Schlagbeanspruchung mehrfach zerkleinert werden können. Um eine derartige Verfahrensführung zu ermöglichen, bei welcher bestimmte Korngrößen in der Höhe des Rotors in Schwebe gehalten werden, ist mit Vorteil die erfindungsgemäße Konstruktion so getroffen, daß die Gebläseleitung unterhalb der Rotorebene radial bis tangential angeschlossen ist. Das aus dem Horizontalprallbrecher abgezogene Feingut stellt eine Teilmenge des Brechgutes und des Gesamtdurchsatzes dar, die ohne Kapazitätserweiterung und ohne konstruktive Vergrößerung des Brechers auf diese Weise unmittelbar aus der Vorzerkleinerungsstufe abgezogen werden kann. Insbesondere muß ein nachfolgender Hauptsichter für große Durchsatzmengen in keiner Weise vergrößert werden, wie dies umgekehrt der Fall wäre, wenn das gesamte Brechgut über einen nachgeschalteten Sichter geführt werden müßte.

Um eine noch weitergehende Klassierung und insbesondere eine Einstellung des über den Feingutabzug des Horizontalprallbrechers ausgetragenen Materials zu ermöglichen, ist mit Vorteil die Ausbildung so getroffen, daß in dem oberhalb des Rotors angeordneten Feingutabzug ein rotierender Korbsichter angeordnet ist. Bei einem derartigen Korbsichter ist ein Korbrad mit regelbarem Antrieb vorgesehen, bei welchem in Abhängigkeit von der Geschwindigkeit des Korbrades bestimmte Partikelgrößen am Durchgang gehindert werden und in der Folge in die strömungsarmen Randzonen zurück fallen, worauf sie entlang der Wand des Horizontalprallbrechers wiederum in den Bereich des Rotors gelangen.

Das auf diese Weise mit vorbestimmtem Kornband ausgetragene Feingut, kann in konventioneller Weise über Zyklone oder Filter abgeschieden werden oder direkt dem Endprodukt der Hauptzerkleinerung zugesetzt werden.

Eine effiziente und rasche Abführung von Feingut ist insbesondere bei hohen Strömungsgeschwindigkeiten und hohen Gebläsedrücken dann möglich, wenn die Ausbildung so getroffen wird, daß der Feingutabzug im wesentlichen parallel zur Rotationsachse des Rotors mündet oder mit der Rotationsachse einen spitzen Winkel einschließt. Insbesondere bei hohen Luftströmungsgeschwindigkeiten gelingt es auch bei einer derartigen Ausführung, den Grobkornanteil im Horizontalprallbrecher bis zu seinem Austrag durch die hiefür vorgesehene Austragsöffnung zu halten.

Die Erfindung wird nachfolgend an Hand von einem in der Zeichnung schematisch dargestellten Ausführungsbeispiel für die Anordnung der einzelnen Zerkleinerungsstufen im Rahmen des erfindungsgemäßen Verfahrens sowie schematische Darstellungen von Ausführungsformen eines erfindungsgemäßen Horizontalprallbrechers näher erläutert.

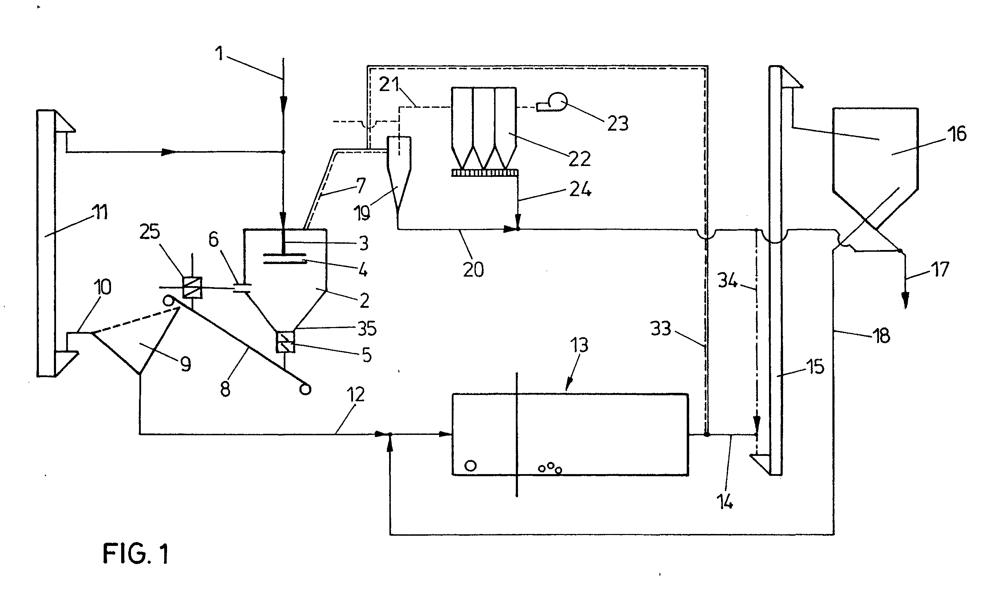

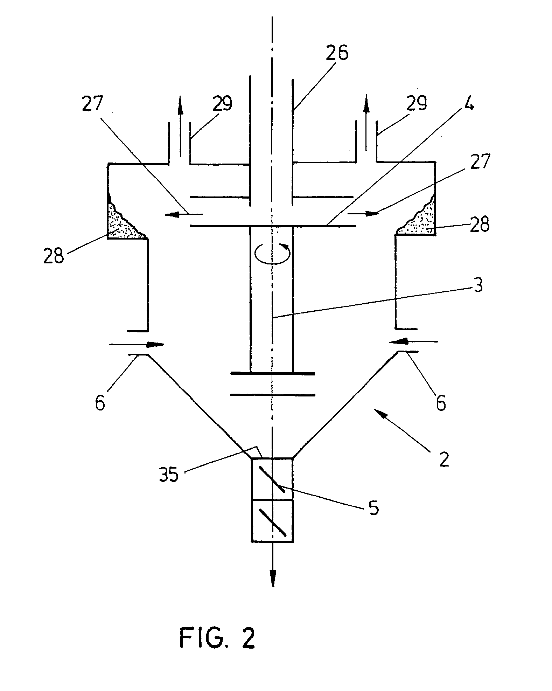

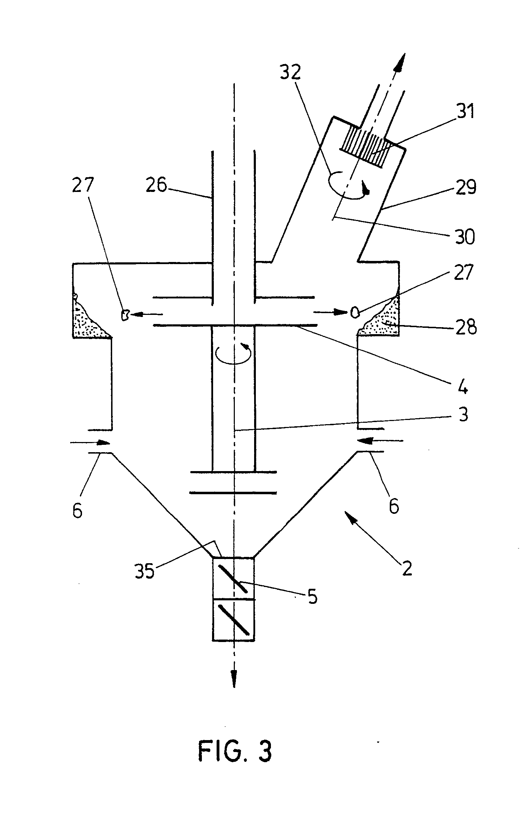

In dieser zeigen Fig.1 eine schematische Darstellung einer Anlage zur Durchführung des erfindungsgemäßen Verfahrens mit einem Horizontalprallbrecher als Vorzerkleinerungsstufe und einer nachgeschalteten Kugelrohrmühle als Zerkleinerungsstufe; Fig.2 im Schnitt eine schematische Darstellung einer ersten Ausführungsform eines erfindungsgemäßen Horizontalprallbrechers zur Durchführung des erfindungsgemäßen Verfahrens; und Fig.3 in einer zu Fig.2 analogen Darstellung eine abgewandelte Ausführungsform eines erfindungsgemäßen Horizontalprallbrechers.

In Fig.1 ist mit 1 eine Materialzufuhr bezeichnet, über welche einem Horizontalprallbrecher 2 zu zerkleinerndes Material, wie beispielsweise Zementausgangsstoffe, zugeführt wird. Der Horizontalprallbrecher 2 weist dabei einen um eine im wesentlichen vertikale Achse 3 rotierbar angeordneten Rotor 4 auf und es ist der Austritt 35 für das gebrochene Grobkorn aus dem Horizontalprallbrecher 2 mit Stauorganen, wie beispielsweise Pendelklappen 5, ausgestattet. Der Horizontalprallbrecher 2 weist weiters eine Gebläseleitung 6 zur Zufuhr von Druckgas sowie einen Auslaß 7 für gesichtetes Feinmaterial auf. Eine genauere Darstellung des Aufbaues des Horizontalprallbrechers ist dabei in den Fig.2 und 3 dargestellt, auf welche weiter unten noch detailliert eingegangen werden wird.

Das über die Pendelklappen 5, welche beispielsweise auch durch Zellradschleusen oder Förderschnecken ersetzt werden können, aus getragene gebrochene Grobkorn gelangt über eine Fördereinrichtung 8 zu einer Siebeinrichtung 9, wobei der Siebüberlauf 10 über eine Fördereinrichtung 11 wiederum der Materialzufuhr 1 und somit dem Horizontalprallbrecher 2 rückgeführt wird, um eine weitergehende Zerkleinerung zu erzielen. Der Siebdurchgang 12 der Siebeinrichtung 9 gelangt in weiterer Folge in eine Kugelrohrmühle 13, welche als Zerkleinerungsstufe dient und beispielsweise zweistufig ausgebildet sein kann. Das aus der Kugelrohrmühle 13 abgezogene Material 14 wird über eine Fördereinrichtung 15 einem Sichter 16, beispielsweise einem Windsichter, zugeführt, aus welchem das ausreichend zerkleinerte Material über 17 abgezogen wird. Mit 18 ist eine Grießerückführung aus dem Sichter 16 bezeichnet, so daß nicht ausreichend zerkleinertes Material wiederum der Kugelrohrmühle 13 rückgeführt wird.

Das aus dem Horizontalprallbrecher 2 über 7 abgezogene Feinmaterial wird einem Abscheider 19, beispielsweise einem Zyklon, zugeführt, wobei das im Abscheider 19 abgeschiedene Material über 20 dem Austrag 17 aus dem Windsichter 16 zugeführt wird. Das aus dem Abscheider 19 abgezogene Feinstmaterial wird mit dem Trägergasstrom über 21 einem Filter 22 zugeführt, bevor das Trägergas, falls es sich um Luft handelt, in einem Kamin 23 abgeblasen wird. Auch das im Filter 22 extrahierte Material wird dem Produktaustrag 17 über 24 zugeführt.

Durch den Einsatz eines Horizontalprallbrechers 2 als Vorzerkleinerungsstufe, aus welchem direkt Feinmaterial abgezogen wird, und durch nachfolgende Siebung des aus dem Horizontalprallbrecher 2 abgezogenen Grobkornes wird es möglich, der nachgeschalteten Kugelrohrmühle 13 ein sowohl nach oben als auch nach unten hin limitiertes Kornband aufzugeben, so daß die Kugelcharge auf die obere und untere Aufgabekorngröße optimiert werden kann. Durch die direkte Abscheidung von Feinstmaterial aus dem Horizontalprallbrecher 2 durch Zufuhr von Druckgas wird es weiters möglich, den Durchsatz der gesamten Anlage insgesamt zu erhöhen oder bei gleicher Durchsatzleistung kleinbauendere Siebeinrichtungen 9 sowie Sichter 16 zu verwenden.

Durch die Zufuhr von Druckgas in den Horizontalprallbrecher 2 zur Ausschleusung von Feinstmaterial kann im Horizontalprallbrecher 2 eine Temperaturbehandlung des zu brechenden Materials vorgenommen werden. Zu diesem Zweck kann das über die Zuleitung 6 in den Horizontalprallbrecher 2 eingespeiste Druckgas vor der Einspeisung zur Einstellung von Temperatur und/oder Feuchtigkeit konditioniert werden, wobei das Druckgas beispielsweise über einen Wärmetauscher 25 geführt wird. Für eine Weiterverarbeitung von Zementklinker ist es beispielsweise günstig, die Temperatur des im Horizontalprallbrechers gebrochenen Material auf etwa 90° C abzukühlen, um in der nachgeschalteten Kugelrohrmühle 13 eine ausreichende Mahlleistung zu gewährleisten. Beim Zerkleinern von Kalkstein kann es beispielsweise notwendig sein, die Restfeuchte auf weniger als 1 % einzustellen, so daß zu diesem Zweck im Horizontalprallbrecher 2 eine Erwärmung des zu brechenden Materiales durch Zufuhr eines geeignet warmen bzw. heißen Druckgases vorgenommen wird.

In Fig.1 ist weiters eine Entstaubungsleitung 33 vorgesehen, über welche Feinstmaterial aus der Kugelrohrmühle 13 dem Vorabscheider 19 sowie in weiterer Folge dem Filter 22 zugeführt werden kann. Weiters kann vorgesehen sein, das aus dem Vorabscheider 19 bzw. aus dem Filter 22 abgezogene Produkt nicht direkt dem Austrag 17 zuzuführen, sondern eine Sichtung vorzunehmen, wofür das über die Leitung 20 ausgetragene Material über 34 der Fördereinrichtung 15 vor dem Sichter 16 zugeführt wird.

Bei der in Fig.2 dargestellten ersten Ausführungsform eines Horizontalprallbrechers 2 sind die Bezugszeichen der Fig.1 für gleiche Bauteile beibehalten worden. Dem Horizontalprallbrecher 2 wird das Material über ein vertikales Rohr 26 in den um die vertikale Achse 3 rotierbar gelagerten Rotor 4 zugeführt, wobei durch die Drehbewegung des Rotors ein Ausschleudern des zu brechenden Materials in radialer Richtung im Sinne der Pfeile 27 erfolgt. Das ausgeschleuderte Material trifft auf das Gutbett 28 auf, wobei beim Aufprall die Zerkleinerung erfolgt. Anstelle des am Umfang angeordneten Gutbettes 28 können auch im wesentlichen tangential angeordnete Prallplatten Verwendung finden, an welchen das ausgeschleuderte Material durch Aufprall zerkleinert wird. Das gebrochene Gut fällt in weiterer Folge in den unter dem Rotor 4 angeordneten Austrag 35, welcher wiederum durch Pendelklappen 5 verschlossen ist. Durch die Drehbewegung des Rotors 4 wird Luft angesaugt, welche durch das Vorsehen von Stauorganen am Grobkornaustrag lediglich durch im Bereich des Deckels des Horizontalprallbrechers 2 vorgesehenen Öffnungen 29 austreten kann. Dabei werden je nach Geschwindigkeit des Rotors 4 und durchgesetzter Luftmenge Partikel unterschiedlicher Größe ausgetragen. Zur Einstellung der Korngröße des auszutragenden Feinmaterials ist neben der durch die Rotordrehung verursachte Luftströmung vorgesehen, über die Einlaß-Öffnungen 6 Druckgas zuzuführen, welches, wie in Fig.1 angedeutet, für eine Einstellung einer entsprechenden Temperatur und/oder Feuchtigkeit beispielsweise über einen Wärmetauscher geführt werden kann. Damit wird es möglich, unabhängig von der Umdrehungsgeschwindigkeit des Rotors 4, welche für eine entsprechende Zerkleinerung des zugeführten Materials optimiert werden soll, eine bestimmte Korngröße über die Öffnungen 29 auszutragen und in weiterer Folge zu sichten bzw. abzuscheiden. Die Pendelklappen 5 verhindern dabei ein Austreten des Druckgasstromes durch den Grobkornaustrag 35 und unterstützen den Aufbau einer gerichteten Strömung. Das eingeblasene Druckgas, insbesondere Druckluft, kann rezirkuliert werden, wenn es nicht zu feucht oder zu heiß ist. Neben einer Einstellung einer auszutragenden Feinkorngröße durch entsprechende Beaufschlagung mit Druckgas kann die Strömungsgeschwindigkeit des Druckgases dabei auch so eingestellt werden, daß bestimmte Korngrößen in Höhe des Rotors 4 nach Art einer Wirbelschicht in Schwebe gehalten werden und durch die aus dem Rotor 4 austretenden Partikel durch Schlagbeanspruchung weiter zerkleinert werden. Für eine entsprechende Aufrechterhaltung einer gerichteten Strömung ist es dabei notwendig, das die Gebläseleitungen 6 unterhalb der Rotorebene radial bis tangential münden. Die Austragsöffnungen 29 sind dabei, wie oben erwähnt, am Deckel des Horizontalprallbrechers 2 vorgesehen und verläuft bei der in Fig.2 dargestellten Ausführungsform im wesentlichen parallel zur Rotorachse 3.

Bei der in Fig.3 dargestellten Ausführungsform ist lediglich eine Austragsöffnung 29 zum Austragen des Feingutes angeordnet, wobei die Achse 30 dieser Austrittsöffnung 29 unter einem spitzen Winkel zur Rotationsachse 3 des Rotors 4 geneigt verläuft. Direkt im Abzug 29 ist bei dieser Ausführungsform ein rotierender Korbsichter 31 angeordnet, welcher um die Achse 30 im Sinne des Pfeiles 32 rotierbar gelagert ist. Es kann somit unmittelbar im Abzug 29 eine Sichtung vorgenommen werden, wobei in Abhängigkeit von der Rotationsgeschwindigkeit des Korbsichters 31 bestimmte Partikelgrößen am Durchgang gehindert werden und in weiterer Folge in die strömungsarmen Randzonen fallen, wo sie im Bereich des Gutbettes 28 auf Höhe der Rotorebene wiederum mit zu brechendem Material in Kontakt gelangen und derart weiter zerkleinert werden.

**Ansprüche**

1. Verfahren zum Zerkleinern von stückigem Material, wie z.B. Zementausgangsstoffen, unter Verwendung eines Horizontalprallbrechers (2) als Vorzerkleinerungsstufe und einer Kugelrohrmühle (13) als Zerkleinerungsstufe, wobei der Zerkleinerungsstufe (13) ein durch Siebung und/oder Sichtung klassiertes Material zugeführt wird, dadurch gekennzeichnet, daß im Horizontalprallbrecher (2) eine Sichtung unter Zufuhr (6) von Druckgasen vorgenommen wird und das Grobkorn aus der Vorzerkleinerungsstufe (2) über gegenüber dem Druckgasstrom Strömungswiderstände aufbauende Einrichtungen (5), wie z.B. Stauklappen, ausgetragen wird, worauf nach einer Siebung (9) der Siebdurchgang (12) des Grobkornes der Kugelrohrmühle (13) und der Siebüberlauf (10) der Vorzerkleinerungsstufe (2) zugeführt wird.

2. Verfahren nach Anspruch 1, dadurch gekennzeichnet, daß das Druckgas vor der Einspeisung zur Einstellung von Temperatur und/oder Feuchtigkeit konditioniert wird.

3. Verfahren nach Anspruch 1 oder 2, dadurch gekennzeichnet, daß das Druckgas vor der Einspeisung über Wärmetauscher geführt wird.

4. Horizontalprallbrecher (2) mit einer Austragsöffnung (34) für Grobkorn und wenigstens einer weiteren Austragsöffnung (7) für Feingut zur Durchführung des Verfahrens nach einem der Ansprüche 1 bis 3, dadurch gekennzeichnet, daß an den Brecher (2) eine Gebläseleitung (6) angeschlossen ist und daß an der unterhalb des Rotors (4) vorgesehenen Austragsöffnung (35) für das Grobkorn Stauorgane (5), wie z.B. Pendelklappen, Zellradschleusen oder Förderschnecken, angeordnet sind.

5. Horizontalprallbrecher nach Anspruch 4, dadurch gekennzeichnet, daß die Gebläseleitung (6) unterhalb der Rotorebene radial bis tangential angeschlossen ist.

6. Horizontalprallbrecher nach Anspruch 4 oder 5, dadurch gekennzeichnet, daß in dem oberhalb des Rotors (4) angeordneten Feingutabzug (7,29) ein rotierender Korbsichter (31) angeordnet ist.

7. Horizontalprallbrecher nach einem der Ansprüche 4 bis 6, dadurch gekennzeichnet, daß der Feingutabzug (7,29) im wesentlichen parallel zur Rotationsachse des Rotors (4) mündet oder mit der Rotationsachse einen spitzen Winkel einschließt.

FIG. 1

EP 0 426 651 A2

FIG. 2

FIG. 3